# EUROPÄISCHE PATENTSCHRIFT

(11) **EP 2 134 498 B1**
(45) Veröffentlichungstag und Bekanntmachung des Hinweises auf die Patenterteilung: **15.11.2017**
(21) Anmeldenummer: 08716325.9
(22) Anmeldetag: 06.03.2008
(51) Int. Cl.: B23K 7/06

(54) **VERFAHREN FÜR AUTOGENE PROZESSE**
METHOD FOR AUTOGENOUS PROCESSES
PROCÉDÉ POUR PROCESSUS AUTOGÈNES

(30) Priorität: 13.03.2007 DE 102007012082; 13.03.2007 DE 102007012083; 26.06.2007 EP 07012516
(43) Veröffentlichungstag der Anmeldung: 23.12.2009
(73) Patentinhaber: Linde AG, 80331 München (DE)
(72) Erfinder: PLEBUCH, Franz-Clemens, 86854 Amberg (DE)
(86) Internationale Anmeldenummer: PCT/EP2008/001810
(87) Internationale Veröffentlichungsnummer: WO 2008/110299

(56) Entgegenhaltungen:
- GB-A- 539 470
- US-A- 2 286 591
- US-A- 2 349 902
- US-A- 4 035 604

## Beschreibung

### Technisches Gebiet

Die vorliegende Erfindung betrifft ein Verfahren zur Bearbeitung oder Verarbeitung von Bauteilen oder von Werkstücken mittels autogener Prozesse, gemäß dem Oberbegriff des Anspruchs 1. Ein solches Verfahren ist in US 4 035 604 beschrieben.

### Stand der Technik

Auf dem technischen Gebiet der Autogentechnik sind verschiedene Flammprozesse, wie das Fugenhobeln, das Löten, das Richten, das Schneiden oder das Wärmen mit einer Flamme, seit langem eingesetzte, manuell handhabbare oder maschinell automatisierbare Prozesse, mittels derer Bauteile oder Werkstücke bearbeitet oder verarbeitet werden können.
Als Flamme wird hierzu eine Flamme verwendet, die aus einem Brenngas oder aus einem Brenngasgemisch und aus einem Oxidator entsteht. Als Brenngas werden meist die Gase Acetylen, Ethen, Methan, Methylacetylen oder Propen oder Gasgemische daraus verwendet. Jedoch können auch andere als diese marktüblichen und für die verarbeitende Industrie wichtigen Brennstoffe verwendet werden. Von allen Brenngasen weist Acetylen die höchste Flammtemperatur auf. Als Oxidator wird Sauerstoff oder auch Luft eingesetzt.
Autogene Prozesse sind Verfahren, bei denen mit einer Flamme gearbeitet wird. So dient beispielsweise das Flammrichten dem Beseitigen von Formveränderungen, die sich im Herstellungsprozess von Bauteilen oder Werkstücken ergeben. Wie etwa dem "Handbuch der Flammrichttechnik", Fachbuchreihe Schweißtechnik, Band 124, DVS-Verlag, Düsseldorf 1995 oder dem Prospekt "Tipps für Praktiker. Flammrichten." (Ausgabe Juni 2005) der Firma Linde entnehmbar ist, wird das Bauteil oder Werkstück beim Flammrichten erwärmt; hierdurch werden unerwünschte Formveränderungen aufgehoben.

Das autogene Brennschneiden gehört zu den thermischen Trennverfahren. Unter Flammwärmen wird das örtliche Erwärmen zur Umformung von Bauteilen verstanden. Flammlöten ist ein Fügeprozess, bei dem eine Verbindung mittels Lots hergestellt wird. Fugenhobeln ist ein Verfahren, um fehlerhafte Schweißnahtverbindungen zu beseitigen.

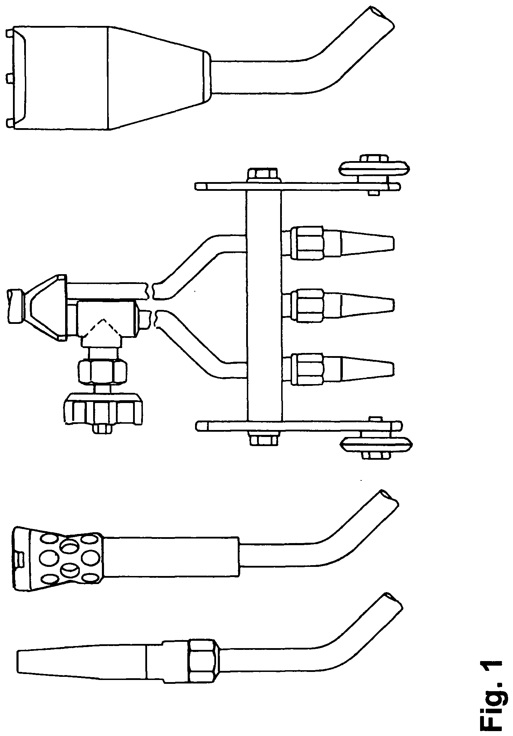

Hinsichtlich der bei autogenen Prozessen eingesetzten Ausrüstung werden Brenner in Abhängigkeit vom jeweiligen Anwendungsfall und in Abhängigkeit von der Dicke des Bauteils oder Werkstücks verwendet (vgl. Fig. 1), wie Einflammen- oder Eindüsenbrenner oder Flammenbrenner, bei denen mehrere, aus einem Brennerkopf austretende Einzelflammen eine einzige gemeinsame Flamme ergeben, oder Mehrdüsenbrenner, bei denen mehrere Düsen jeweils eine Flamme aufweisen, oder auch Sonderbrenner.

Zum Stand der Technik sei des Weiteren auf die Druckschrift US 2 286 591 aufmerksam gemacht, in der ein Verfahren zum Be- oder Verarbeiten mindestens eines Bauteils oder Werkstücks mittels autogener Prozesse offenbart ist. Für den technologischen Hintergrund der vorliegenden Erfindung sind auch die Druckschriften GB 539 470, US 2 349 902 und US 4 035 604 von gewisser Bedeutung.

Bei den vorbeschriebenen, von Hand oder maschinell geführten Prozessen der Autogentechnik, bei denen offene Flammen, insbesondere offene Brenngas-Sauerstoff-Flammen oder offene Brenngas-Luft-Flammen, zum Einsatz kommen, erscheint eine Reduzierung der im Abgas des Brenners enthaltenen Schadstoffkonzentration, insbesondere der Konzentration an Stickstoffoxiden (NOₓ), wie etwa an giftigem Stickstoffmonoxid (NO) und/oder Stickstoffdioxid (NO₂), und an anderen schädlichen Verbindungen, erstrebenswert, nicht zuletzt um bestehende Schadstoffgrenzwerte einzuhalten und damit einher gehend die Schadstoffemissionen sowie die Umweltbelastung zu minimieren und auf diese Weise gesundheitliche Belastungen des Bedieners des Brenners weitestgehend auszuschließen.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein zum Be- oder Verarbeiten mindestens eines Bauteils oder Werkstücks mittels autogener Prozesse vorgesehenes Verfahren zum Be- oder Verarbeiten mindestens eines Bauteils oder Werkstücks mittels autogener Prozesse so weiterzubilden, dass eine Reduzierung der Schadstoffkonzentration, insbesondere der Konzentration an Stickoxiden (NOₓ) und an anderen schädlichen Verbindungen, erzielt wird.

Diese Aufgabe wird durch ein Verfahren mit den im Anspruch 1 angegebenen Merkmalen gelöst. Vorteilhafte Ausgestaltungen und zweckmäßige Weiterbildungen der vorliegenden Erfindung sind in dem Unteranspruch 2 gekennzeichnet.

Mithin basiert die vorliegende Erfindung auf der Bereitstellung eines erfindungsgemäßen Verfahrens das beinhaltet somit, dass die Flamme des autogenen Prozesses vollständig von einem Hüllgas umhüllt wird.

Mittels diesem Verfahren kann mindestens ein Hüllgas so geführt werden, dass dieses Hüllgas nach Art mindestens eines Gasvorhangs mindestens eine aus dem Brenner(kopf) oder aus der Düse in Richtung des Bauteils oder Werkstücks austretende Flamme umhüllt. Besonders von Vorteil ist hierbei die vollständige Umhüllung der Flamme, wodurch die im Abgas enthaltene Schadstoffkonzentration, insbesondere die Konzentration an Stickoxiden (NOₓ), reduziert wird.
Gemäß einer besonders zweckmäßigen Weiterbildung der vorliegenden Erfindung steht der dem Bauteil oder Werkstück zugewandte Endbereich der Hüllgaseinrichtung in Bezug auf den dem Bauteil oder Werkstück zugewandten Endbereich des Brennerkopfs oder der Düse etwas über. Auf diese Weise wird eine besonders intensive sowie stabile Abschottung der Flamme erreicht und die Bildung von im Abgas enthaltenen Schadstoffen, insbesondere die Bildung von Stickoxiden (NOₓ), wirkungsvoll unterbunden.

Mithin kann mittels des Hüllgases die im Abgas der Vorrichtung enthaltene Schadstoffkonzentration, insbesondere die Konzentration an Stickstoffoxiden (NOₓ), wie etwa an giftigem Stickstoffmonoxid (NO) und/oder Stickstoffdioxid (NO₂), und an anderen unerwünschten Verbindungen, reduziert werden, indem die Flamme durch das Hüllgas abgeschottet wird und durch dieses Abschotten der Flamme der Eintrag von Atmosphäre weitestgehend bis vollständig verhindert wird. In diesem Zusammenhang ermöglicht die vorliegende Erfindung eine
- sowohl der Gesundheit des Bedieners des Brenners
- als auch der Einhaltung von Grenzwerten zuträgliche Schadstoffminimierung.
Es handelt sich beim im Zwischenraum zwischen der Außenwand des Brenner(kopf)s oder der Düse und der Innenwand der Hüllgaseinrichtung geführten Hüllgas oder Vorhanggas (im Sinne eines einen Vorhang erzeugenden Gases) um mindestens ein Gas oder um mindestens eine Gasmischung aus der Gruppe der Gase Argon, Helium, Kohlendioxid, Sauerstoff, Stickstoff und Wasserstoff oder deren Gemische. Auch kann es von Vorteil sein, dass eine Gasmischung zum Einsatz kommt, die normalerweise als Formiergas oder als Schweißschutzgas dient. Andere inerte Gase, wie beispielsweise Neon, sind ebenfalls möglich.
Das Abschotten der aus dem Brenner(kopf) oder aus der Düse in Richtung des Bauteils oder Werkstücks austretenden Flamme mittels des in Form des Hüllgases erzeugten Gasevorhangs bewirkt ferner, dass die Flamme konzentrierter auf das Bauteil oder Werkstück einwirken kann. Somit wird die Flamme mittels der Hüllgaseinrichtung, die auch als Hüllstromeinrichtung bezeichnet werden kann, konzentriert.
Mittels des Hüllgases wird somit der Wärmeübergang oder Wärmeübertrag auf das Bauteil oder Werkstück beschleunigt und auf diese Weise wird der Einsatz des Brenners optimiert, indem die Flamme durch das Hüllgas konzentriert wird und Wechselwirkungen der Flamme mit der Atmosphäre unterbunden werden. Eine derartige Verbesserung des Wärmeübergangs bewirkt also eine Verkürzung der Bearbeitungszeiten, das heißt die Prozesszeit bei autogenen Prozessen kann erfindungsgemäß verkürzt werden. Durch eine derartige Erhöhung der Verfahrensgeschwindigkeit werden autogene Prozesse effizienter und wirtschaftlicher.

Insbesondere wird infolge des verbesserten Wärmeeintrags beim autogenen Prozess die Verfahrensgeschwindigkeit des autogenen Prozesses um mindestens ein Drittel, vorzugsweise um mindestens die Hälfte, erhöht. Infolgedessen werden die die Fertigungszeiten, zum Beispiel im Rohrleitungsbau, im Schiffsbau oder im Stahlbau, verkürzt und der Produktdurchsatz beschleunigt.

Für die Hüllgaseinrichtung sind verschiedene vorteilhafte Ausgestaltungen möglich. Gemeinsam ist diesen Ausgestaltungen, dass das Hüllgas, insbesondere zwischen Brenneraußenseite und Innenseite der Hüllgaseinrichtung, derart geführt werden kann, dass die Brenngas(gemisch)flamme möglichst vollständig vom durch das Hüllgas gebildeten Gasvorhang eingeschlossen wird.

Die jeweilige konkrete Form der Hüllgaseinrichtung ist auch davon abhängig, wie intensiv die Flamme umhüllt werden soll. Um beispielsweise eine besonders intensive und stabile Ummantelung der Flamme zu gewährleisten, ist der Einsatz einer Hüllgaseinrichtung nach Art eines geschlossenen Hohlzylinders von besonderem Vorteil. Besonders vorteilhaft ist es hierbei, einen Hohlzylinder oder ein Rohr über den Brenner oder zumindest über den Brennerkopf oder die Düse zu führen.

In einer anderen zweckmäßigen Ausgestaltung kann die Hüllgaseinrichtung auch ein Ring sein, der den Brenner oder die Flamme umgibt und aus dem das Hüllgas ausströmt und den Gasvorhang bildet.

In bevorzugter Ausgestaltung kann bzw. können auch eine oder mehrere weitere Hüllgaseinrichtung(en), insbesondere eine zweite Hüllgaseinrichtung, zum Einsatz gelangen, wobei in zweckmäßiger Weise die erste Hüllgaseinrichtung und die zweite Hüllgaseinrichtung konzentrisch angeordnet sind. Eine derartige zweite Hüllgaseinrichtung ist insbesondere dann von Nutzen, wenn mit verschiedenen Arten von Hüllgas und/oder mit unterschiedlichen Strömungsgeschwindigkeiten des jeweiligen Hüllgases und demzufolge mit mehr als einem Gasvorhang gearbeitet wird, zum Beispiel um ein besonders hohes Maß an Abschottung der Flamme zu erzielen.

In besonders vorteilhafter Weise ist
- beim Einflammen- oder Eindüsenbrenner der Düse eine Hüllgaseinrichtung zugeordnet,
- beim Flammenbrenner, bei dem viele kleine Einzelflammen eine aus dem Brennerkopf oder aus der Düse austretende Flamme bilden, dem Brennerkopf oder der Düse eine Hüllgaseinrichtung zugeordnet,
- beim Mehrdüsenbrenner, insbesondere beim Mehrdüsenrichtbrenner, jeder der mehreren Düsen jeweils eine eigene Hüllgaseinrichtung zugeordnet und
- beim Sonderbrenner dem Brennerkopf oder der Düse eine Hüllgaseinrichtung zugeordnet.

### Kurze Beschreibung der Zeichnungen

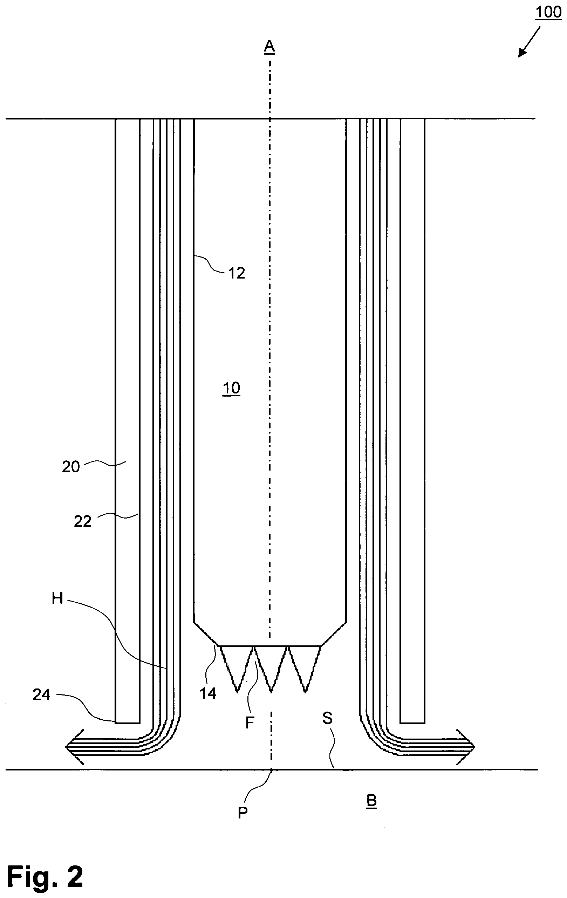

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 2 verwiesen, andererseits werden weitere Ausgestaltungen, Merkmale und Vorteile der vorliegenden Erfindung nachstehend unter anderem anhand des durch Fig. 2 veranschaulichten Ausführungsbeispiels näher erläutert.

Es zeigt:
- Fig. 1: in schematischer Darstellung verschiedene Ausführungsbeispiele für konventionelle Flammvorrichtungen nach Art eines Einflammen- bzw. Eindüsenbrenners, eines Flammenbrenners, eines umschaltbaren Dreidüsenbrenners und eines Sonderbrenners; und
- Fig. 2: in schematischer Schnittdarstellung ein Ausführungsbeispiel für eine Vorrichtung, die eine Hüllgaseinrichtung aufweist und nach dem Verfahren gemäß der vorliegenden Erfindung arbeitet.

### Bester Weg zur Ausführung der vorliegenden Erfindung

In Fig. 2 ist ein Ausführungsbeispiel einer für autogene Verfahren bestimmten Vorrichtung, das heißt eines Flammbrenners 100. Die anhand Fig. 2 veranschaulichte Art der Anordnung eines Brennerkopfs 10 ermöglicht einen kostengünstigen und effektiven Einsatz des Flammbrenners 100 beim gewünschten Autogenflammverfahren.
Der Flammbrenner 100 gemäß Fig. 2 zeichnet sich durch eine hohlzylinder- oder ringförmige Hüllgaseinrichtung 20 aus, die zum Führen eines Hüllgases H zwischen der Außenwand 12 des Brennerkopfs 10 und der Innenwand 22 der Hüllgaseinrichtung 20 bestimmt ist. Mit diesem Hüllgas H kann nach Art eines Gasvorhangs die am Gasaustrittsort 14 in Richtung des Bauteils B austretende Acetylen-Sauerstoff-Flamme F eingeschlossen werden, so dass die Flamme F konzentrierter auf den sich auf der Oberfläche des Bauteils B befindlichen Wirkpunkt P einwirken kann.
Aus der exemplarischen Darstellung gemäß Fig. 2 geht des Weiteren hervor, dass der dem Bauteil B zugewandte Endbereich 24 der Hüllgaseinrichtung 20 in Bezug auf den Gasaustrittsort 14 ein Stück vorsteht, um eine besonders intensive und stabile Abschottung der Flamme F zu erreichen und um auf diese Weise die Bildung von im Abgas enthaltenen Schadstoffen, insbesondere die Bildung von Stickoxiden (NOₓ), wirkungsvoll zu unterbinden.
In Abhängigkeit von Art und Zweck des Flammprozesses ist dies jedoch nicht obligatorischer Bestandteil der vorliegenden Erfindung. So kann die Hüllgaseinrichtung 20 auch in etwa gleich lang wie der Brennerkopf 10 sein, oder die Hüllgaseinrichtung 20 kann auch kürzer als der Brennerkopf 10 sein.

Im Zuge einer größtmöglichen Symmetrie der anhand Fig. 2 veranschaulichten Anordnung 100 ist die Hüllgaseinrichtung 20 in Bezug auf den Brennerkopf 10 so angeordnet, dass die Symmetrieachse der Hüllgaseinrichtung 20 mit der Symmetrieachse A des Brennerkopfs 10 zusammenfällt.

In einer beispielhaften Ausgestaltung für einen Einflammen-/Eindüsenbrenner oder auch für einen Mehrdüsenbrenner ist anstelle des Brennerkopfs 10 eine Düse, aus der eine Flamme F austritt, im Flammbrenner 100 angeordnet.

Für den Erfolg des autogenen Prozesses ist die Leistungskraft des Brenngases von besonderer Bedeutung. Die sehr hohe Temperatur der Acetylen-Sauerstoff-Flamme F in Verbindung mit einer hohen Wärmeleistung der Acetylen-Sauerstoff-Flamme F ergibt einen maximalen Effekt, der sich in hoher Wirtschaftlichkeit und Effizienz niederschlägt.

Die Vorteile der vorliegenden Erfindung zeigen sich für alle Brenngase. Verschiedene Brenngase werden beispielsweise in der Norm EN ISO 5172 genannt, wenn auch die Aufzählung dort nicht abschließend ist. Als Verbrennungspartner kann anstelle von Sauerstoff auch Druckluft eingesetzt werden. Die Brennergröße wiederum ist in Abhängigkeit von der Art des Werkstoffs B und/oder von der Dicke des Werkstoffs B zu wählen.

Die vorbeschriebenen Vorteile, zu denen insbesondere auch eine signifikante Herabsetzung der Schadstoffkonzentration im Brennerabgas und damit einher gehend eine Minimierung der gesundheitlichen Belastungen des Bedieners des Brenners sowie weiterhin eine vorteilhafte Gestalt der Flamme und damit einher gehend eine signifikante Verbesserung des Wärmeübergangs und damit eine spürbare Anhebung der Verfahrensgeschwindigkeit des autogenen Prozesses gehört, zeigen sich bei der vorliegenden Erfindung speziell in Kombination mit der Verwendung geeigneter Hüllgase, wie etwa Argon, Helium, Kohlendioxid, Sauerstoff, Stickstoff und Wasserstoff sowie deren Mischungen, wie spezielle Mischungen, die als Formiergase oder Schweißschutzgase bekannt sind.

### Bezugszeichenliste

- 100: Zum Be- oder Verarbeiten des Bauteils oder Werkstoffs oder Werkstücks B mittels autogener Prozesse vorgesehene Vorrichtung, insbesondere Flamm(en-)brenner
- 10: Brennerkopf oder Düse
- 12: Außenseite oder Außenwand des Brennerkopfs oder der Düse 10
- 14: Ende oder Endbereich des Brennerkopfs oder der Düse 10, insbesondere Gasaustrittsort
- 20: Hüllgaseinrichtung oder Hüllstromeinrichtung
- 22: Innenseite oder Innenwand der Hüllgaseinrichtung 20
- 24: Ende oder Endbereich der Hüllgaseinrichtung 20
- A: Symmetrieachse des Brennerkopfs oder der Düse 10
- B: Bauteil oder Werkstoff oder Werkstück
- F: Flamme
- H: Hüllgas oder Vorhanggas
- P: Wirkpunkt, insbesondere Auftreffpunkt der Flamme F auf dem Bauteil oder Werkstoff oder Werkstück B
- S: Oberfläche des Bauteils oder Werkstoffs oder Werkstücks B

## Patentansprüche

1. Verfahren zum Be- oder Verarbeiten eines Bauteils oder Werkstückes (B) mittels eines Prozesses, wobei eine aus einem Brennerkopf oder aus einer Düse (10) in Richtung des Bauteils oder Werkstückes (B) austretende Flamme (F) mit einem Hüllgas (H) umhüllt wird, **dadurch gekennzeichnet, dass** es sich um einen autogenen Prozess handelt, und beim Hüllgas (H) um ein Gas oder eine Gasmischung aus der Gruppe der Gase Argon, Helium, Kohlendioxid, Sauerstoff und Wasserstoff handelt, um die im Abgas enthaltene Konzentration von Stickoxiden (NOX) zu reduzieren.

2. Verfahren nach Anspruch 1, **dadurch gekennzeichnet, dass** der autogene Prozess das Flammrichten, das Brennschneiden, das Flammwärmen, das Flammlöten oder das Fugenhobeln ist.

## Claims

1. Method for working or processing a component or workpiece (B) by means of a process, wherein a flame (F) issuing from a burner head or from a nozzle (10) in the direction of the component or workpiece (B) is enveloped by an enveloping gas (H), **characterized in that** the process is an autogenous process and the enveloping gas (H) is a gas or a gas mixture from the group of gases argon, helium, carbon dioxide, oxygen and hydrogen, for reducing the concentration of nitrogen oxides (NOX) contained in the exhaust gas.

2. Method according to Claim 1, **characterized in that** the autogenous process is flame straightening, oxy-fuel cutting, flame heating, torch brazing or flame gouging.

## Revendications

1. Procédé pour usiner ou traiter un composant ou une pièce (B) au moyen d'un processus, une flamme (F) sortant d'une tête de brûleur ou d'une buse (10) dans la direction du composant ou de la pièce (B) étant enveloppée d'un gaz d'enveloppe (H), **caractérisé en ce qu'**il s'agit d'un processus autogène et le gaz d'enveloppe (H) est un gaz ou un mélange de gaz du groupe de gaz contenant l'argon, l'hélium, le dioxyde de carbone, l'oxygène et l'hydrogène afin de réduire la concentration en oxydes d'azote (NOX) contenus dans le gaz d'échappement.

2. Procédé selon la revendication 1, **caractérisé en ce que** le processus autogène est le redressage à la flamme, l'oxycoupage, le chauffage à la flamme, le brasage à la flamme ou l'oxyrainurage.
